(19) Europäisches Patentamt
European Patent Office
Office européen des brevets

(11) Publication number: **0 022 785**
**B1**

(12) **EUROPEAN PATENT SPECIFICATION**

(45) Date of publication of patent specification: **10.11.82**

(51) Int. Cl.³: **C 01 F 11/10, C 01 B 17/16**

(21) Application number: **79901212.5**

(22) Date of filing: **04.10.79**

(86) International application number: **PCT/SE79/00200**

(87) International publication number: **WO 80/00831 01.05.80 Gazette 80/10**

# (54) A METHOD OF RECOVERING CALCIUM AND SULPHUR COMPOUNDS FROM A METALLURGICAL WASTE MATERIAL.

(30) Priority: **11.10.78 SE 7810633**

(43) Date of publication of application: **28.01.81 Bulletin 81/4**

(45) Publication of the grant of the patent: **10.11.82 Bulletin 82/45**

(84) Designated Contracting States: **DE FR GB**

(56) References cited: **SE - B - 388 875**

(73) Proprietor: **COLLIN, Per Harald**
**Kyrkbacksvägen 15**
**S-791 00 Falun (SE)**

(72) Inventor: **COLLIN, Per Harald**
**Kyrkbacksvägen 15**
**S-791 00 Falun (SE)**

(74) Representative: **Burman, Tore et al,**
**Bergling & Sundbergh AB P.O.Box 7645**
**S-103 94 Stockholm (SE)**

**EP 0 022 785 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A method of recovering calcium and sulphur compounds from a metallurgical waste material

TECHNICAL FIELD:

The invention relates to a method of recovering calcium and sulphur compounds from a metallurgical waste material. More specifically, the invention relates to a method of recovering calcium hydroxide or calcium carbonate, or both, and hydrogen sulphide from the waste material which is produced when sulphur is removed from a metallurgical material by means of lime. The waste material may originate, for example, from the removal of sulphur from raw iron by means of pulverulent lime, or from the prereduction of iron ore concentrate in the presence of lime.

BACKGROUND ART:

A metallurgical waste material of the type concerned may be produced in the reduction of iron ore concentrate in a fluidized bed. The reducing agent added to the fluidized bed is fine-grained lignite coal, mineral coal, anthracite coal, or the like. In order to bind the sulphur added with the reducing agent, a fine-grained CaO-material is added, such as burnt lime, burnt dolomite, limestone or dolomite. The product withdrawn from the fluidized bed is cooled and subjected to a magnetic separation resulting in two portions, viz. a first portion substantially consisting of Fe, FeO and coke, and a second portion substantially consisting of coke, coke ash, gangue, CaO and CaS. This second portion is a useful starting material for the process of the invention. A reduction process of this type is disclosed in Swedish patent No. 7502369—7, published under SE—B 388 875, and the equivalent U.K. patent GB—A 1 508 273.

DISCLOSURE OF THE INVENTION:

The method of this invention consists of the combination of these operations:

*1.* A selected flow of the pulverulent waste material is suspended under agitation in an aqueous phase.

*2.* Gaseous $H_2S$ is injected into the suspension resulting from operation 1, said $H_2S$ having been produced in operation 4 described below. The flow of $H_2S$ is regulated so that the partial pressure of $H_2S$ in the gaseous phase above the suspension is at least 0.1 bar, suitably 0.2—5 bar, and preferably 0.5—1.5 bar. The temperature of the suspension may vary, but is preferably 20—90°C. The chemical reaction taking place in this operation is as follows:

$$(1-x)CaO + xCaS + (2-x)H_2S = Ca(SH)_2 + (1-x)H_2O \qquad (1)$$

in which $0 < x < 1$.

The formula means that CaO and CaS are dissolved, forming $Ca(SH)_2$. If this reaction is to proceed at a sufficiently high speed it is necessary that the solution contains free $H_2S$, which means that there shall be some partial pressure of $H_2S$ in the gaseous phase above the solution. If this partial pressure is at least 0.1 bar, the reaction speed is satisfactory for practical use. The reaction speed increases with the partial pressure of the $H_2S$. Therefore, it is useful to maintain a partial pressure of 0.2—5 bar, preferably 0.5—1.5 bar. It appears that there is no use in maintaining a still higher partial pressure of $H_2S$.

*3.* Insoluble material is separated from the solution produced in operation 2, for example by sedimentation or filtering. The insoluble material is disposed of.

*4.* $H_2S$ is driven off from the solution produced in operation 3. The flow of $H_2S$ shall be selected to cover the demand of $H_2S$ in operation 2. The $H_2S$ can be driven off, for example by exposing the solution to vacuum or by blowing steam into the solution. The best way, however, of driving off $H_2S$ is to blow $CO_2$ into the solution, and to select the flow of $CO_2$ so that of the released $H_2S$ covers the demand of $H_2S$ in operation 2. The chemical reaction taking place in this operation is:

$$Ca(SH)_2 + \frac{2-x}{2}CO_2 + \frac{2-x}{2}H_2O = (2-x)H_2S + \frac{2-x}{2}CaCO_3 + \frac{x}{2}Ca(SH)_2 \qquad (2)$$

It can be seen from formula (2) that the flow of $CO_2$ has been limited so as to produce only so much $H_2S$ as is required in operation 2, viz. $(2-x)H_2S$, vide formula (1). This means that only part of the $Ca(SH)_2$ in the solution coming from operation 2 is decomposed and transformed into $CaCO_3$.

*5.* The remaining $H_2S$ in the suspension coming from operation 4 is driven off. This can be done by means of vacuum or steam. The result is that $Ca(OH)_2$ precipitates, and a gaseous mixture of $H_2S$ and water vapour leaves the suspension. The water vapour is removed by cooling the gaseous mixture, and the $H_2S$ is withdrawn for further processing. It may, for example, be converted by known methods into elementary sulphur, $SO_2$, $H_2SO_4$.

It is preferred, however, to drive off the $H_2S$ by means of $CO_2$. The result is that $CoCO_3$ precipitates, and a gaseous mixture of $H_2S$ and $CO_2$ leaves the suspension. The flow of $CO_2$ is controlled so that said gaseous mixture contains at least 5 per cent by volume of $CO_2$, suitably 5—50 and preferably 10—30 per cent by volume. The chemical reaction taking place in this operation is:

$$\frac{2-x}{2}CaCO_3 + \frac{x}{2}Ca(SH)_2 + (\frac{x}{2} + \Delta)CO_2 + \frac{x}{2}H_2O = CaCO_3 + xH_2S + \Delta CO_2 \quad (3)$$

It can be seen from formula (3) that the flow of $CO_2$ is controlled so that the released gas contains $CO_2$. The $CO_2$ flow is preferably selected so that $\Delta > 0.05x$.

*6.* The $Ca(OH)_2$ or the $CaCO_3$ produced in operations 4 and 5 is separated from the aqueous solution by sedimentation, filtering or in any other known way.

*7.* The aqueous solution from operation 6 may be used for suspending pulverulent waste material in operation 1.

BEST MODE OF CARRYING OUT THE INVENTION WITH REFERENCE TO THE DRAWING:

A selected flow of a pulverulent material is fed from a feed hopper 1 via a weighing conveyor 2 to a container 4 containing a mixer 3a driven by a motor 3b. The material contains the following constituents, the contents being given as per cent by weight:

| Coke | Ashes | Gangue | CaO | CaS |
|---|---|---|---|---|
| 29.8 | 19.7 | 34.5 | 9.0 | 7.0 |

A selected flow of water is supplied to the container 4 from a return water container 6 via a conduit 45 provided with a flow control valve 5a operated by a flow sensor 5b. The pulverulent material is suspended in the water in the container 4, and the suspension is pumped through a conduit 47 by a pump 7 to a first reaction tank 9 containing an agitator 8a driven by a motor 8b. A selected flow of water is supplied to the reaction tank 9 from the return water container via said conduit 45 and a conduit 46 provided with a control valve 10a operated by a flow sensor 10b. Gaseous $H_2S$ from a second reaction tank 11 is supplied in a controlled flow into the bottom portion of the first reaction tank 9 via a conduit 49 and a distribution member 12. Excess $H_2S$ leaves the tank 9 through a conduit 32. The desired partial pressure of $H_2S$ in the gas-filled space of the tank 9 is maintained by means of a control valve 13a in said conduit 32. The control valve 13a is operated by a pressure sensor 13b.

The suspension formed in the tank 9 contains coke, ashes and gangue suspended in a solution of $Ca(SH)_2$. This suspension is conveyed to hydrocyclone separators 14. The liquid from these separators is passed through a conduit 50 and a pump 20 to the second reaction tank 11. The conduit 50 contains a control valve 15a operated by a liquid level sensor 15b in the first reaction tank 9 so as to maintain a constant liquid level in said tank 9. The flows of reject material from the separators 14 are pumped by sludge pumps 16 to a filter 17a containing a vacuum cylinder 17b. In this filter the content of solids is separated and washed. The filter cake, containing coke, ashes and gangue, is removed. The filtrate is conveyed to a container 18 and is pumped from this container 18 via a conduit 48 to the first reaction tank 9. The conduit 48 contains a flow control valve 19a operated by a liquid level sensor 19b in the container 18.

The accept/liquid from the separator 14 is a solution of CaS and CaSH. It is conveyed by the pump 20 into the second reaction tank 11. The liquid flows down through a plurality of perforated platforms 21 to the bottom portion of the tank, which contains an agitator 22a, driven by a motor 22b and a gas distribution member 23. A selected flow of $CO_2$ is blown into the tank 11 via conduits 42, 43 containing a flow control valve 24a operated by a flow sensor 24b. The conduit 43 is connected to said gas distribution member 23. The flow of $CO_2$ is controlled so that the resulting flow of $H_2S$, which is passed to the tank 9, is adequate for dissolving the CaO + CaS supplied to the tank 9, vide formulas 1 + 2. The pump 20 produces in the tank 11 a pressure sufficiently high for the $H_2S$ to be pressed over into the tank 9. A suspension of $CaCO_3$ in a solution of $Ca(SH)_2$ is formed in the tank 11. This suspension is conveyed to a third reaction tank 26 via a conduit 51 containing a flow control valve 25a operated by a liquid level sensor 25b in the tank 11.

The upper portion of the third reaction tank 26 contains a plurality of perforated platforms 27. The suspension flows down through said platforms, in countercurrent flow to a gaseous mixture coming from the lower portion of the tank. The suspension is collected in the lower portion of the tank, where an agitator 28a driven by a motor 28b and a gas distribution member 29 are provided.

A selected flow of $CO_2$ is supplied to the tank 26 via a conduit 44 and said gas distribution member 29. The conduit 44 contains a flow control valve 30a operated by a flow sensor 30b. The flow of $CO_2$ is controlled so that the resulting $H_2S$ gas leaving the tank 26 via a pressure control valve 31a operated by a pressure sensor 31b contains > 5% $CO_2$, suitably 5—50% $CO_2$, and preferably 10—30% $CO_2$. This gas is withdrawn from the plant through a conduit 32 which also receives the $H_2S$ leaving the tank 9. The gas may be conveyed, for example, to a Claus plant in which the sulphur content of the gas is converted into elementary S.

A suspension of $CaCO_3$ in water is formed in the tank 26. This suspension is conveyed to the return water container 6 via a conduit 52 and hydrocyclone separators 34. The conduit 52 contains a

flow control valve 33a operated by a liquid level sensor 33b in the tank 26. The liquid from the separators 34 is passed through a conduit 53 to the water container 6.

The reject material from the separators 34 is pumped by sludge pumps 35 to a vacuum filter 36, in which the solids is separated and washed. The filter cake, containing $CaCO_3$, is removed, and the filtrate is collected in a container 37 from which it is pumped by a pump 39 via a conduit 54 to the return water container 6. The conduit 54 contains a flow control valve 38a operated by a liquid level sensor 38b in the container 37.

The plant as illustrated looses water via the filter cakes from the filters 17 and 36. Water to compensate for this loss is supplied by the addition of selected flows of washing water to the filters and fresh water to the return water container 6 through a conduit 40. From said container 6 water is conveyed by a pump 41 through the conduit 45 to the suspension container 4 and the first reaction tank 9.

## Claims

1. A method of recovering calcium and sulphur compounds from a material containing CaO and CaS, characterized in the combination of the following operations:

(a) Suspending a powder of the material in an aqueous phase;

(b) Injecting a flow of $H_2S$ into said suspension while controlling the flow of $H_2S$ to maintain a partial pressure of $H_2S$ in the gaseous phase above the suspension of at least 0.1 bar, suitably 0.2—5 bar, and preferably 0.5—1.5 bar, CaO and CaS being dissolved while forming $Ca(SH)_2$;

(c) Separating insoluble material from the $H_2S$-containing solution of $Ca(SH)_2$ produced in operation (b);

(d) Driving off $H_2S$ from the $H_2S$-containing solution of $Ca(SH)_2$ produced in operation (c), to produce a flow of $H_2S$ selected to cover the demand of gaseous $H_2S$ in operation (b).

(e) Driving off the residual $H_2S$ from the solution produced in operation (d);

(f) Separating the precipitated $Ca(OH)_2$ or $CaCO_3$, or both, produced in operations (d) and (e) from the aqueous phase;

(g) Recycling the aqueous phase from operation (f) to the suspending process in operation (a).

2. A method as claimed in claim 1, characterized in driving off the $H_2S$ in operations (d) and (e) by means of vacuum.

3. A method as claimed in claim 1, characterized in driving off the $H_2S$ in operations (d) and (e) by means of steam.

4. A method as claimed in claim 1, characterized in driving off the $H_2S$ in operations (d) and (e) by means of $CO_2$.

5. A method as claimed in claim 4, characterized in driving off $H_2S$ in operation (d) with $CO_2$ in a flow selected to produce in the leaving $H_2S$ a $CO_2$ content of at least 5 per cent by volume of $CO_2$, suitably 5—50 per cent, and preferably 10—30 per cent.

## Revendications

1. Procédé de récupération des composés de calcium et de soufre à partir d'un matériau contenant CaO et CaS, caractérisé par la combinaison des opérations suivantes:

(a) Mise en suspension d'une poudre du matériau dans une phase aqueuse,

(b) Injection d'un courant de $H_2S$ dans ladite suspension, en réglant le débit de $H_2S$ de manière à maintenir une pression partielle de $H_2S$ dans la phase gazeuse au-dessus de la suspension d'au moins $0{,}1 \times 10^5$ Pa, avantageusement de $0{,}2 \times 10^5$ à $5 \times 10^5$ Pa, et de préférence de $0{,}5 \times 10^5$ à $1{,}5 \times 10^5$ Pa, CaO et CaS étant dissous en formant $Ca(SH)_2$;

(c) Séparation d'un matériau insoluble de la solution de $Ca(SH)_2$ contenant $H_2S$, produite dans l'opération (b);

(d) Séparation de $H_2S$ de la solution de $Ca(SH)_2$ contenant $H_2S$ produite dans l'opération (c), de manière à obtenir un courant de $H_2S$ choisi pour répondre à la demande en $H_2S$ gazeux dans l'opération (b);

(e) Séparation du $H_2S$ résiduel de la solution produite dans l'opération (d);

(f) Séparation de $Ca(OH)_2$ ou $CaCO_3$ précipité ou des deux, produits dans les opérations (d) et (e) d'avec la phase aqueuse;

(g) Recyclage de la phase aqueuse de l'opération (f) vers la mise en suspension dans l'opération (a),

2. Procédé selon la revendication 1, caractérisé en ce qu'on élimine $H_2S$ dans les opérations (d) et (e) au moyen du vide.

3. Procédé selon la revendication 1, caractérisé en ce qu'on élimine $H_2S$ dans les opérations (d) et (e) au moyen de vapeur.

4. Procédé selon la revendication 1, caractérisé en ce qu'on élimine $H_2S$ dans les opérations (d) et (e) au moyen de $CO_2$.

5. Procédé selon la revendication 4, caractérisé en ce qu'on élimine $H_2$ dans l'opération (d) au

moyen de $CO_2$ à un débit donné pour que le courant de $H_2S$ séparé ait une teneur en $CO_2$ d'au moins 5% en volume de $CO_2$, avantageusement de 5 à 50% et de préférence de 10 à 30%.

**Patentansprüche**

1. Verfahren zur Gewinnung von Calcium- und Schwefelverbindungen aus einem CaO und CaS enthaltenden Material, gekennzeichnet durch die Kombination der folgenden Maßnahmen:

a) Suspendieren eines Pulvers des Materials in einer wäßrigen Phase,

b) Einspritzen eines $H_2S$-Stromes in diese Suspension unter derartiger Steuerung des $H_2S$-Stromes, daß ein $H_2S$-Partialdruck in der Gasphase oberhalb der Suspension von wenigstens 0,1 bar, zweckmäßig 0,2 bis 5 bar und vorzugsweise 0,5 bis 1,5 bar aufrechterhalten wird, wobei CaO und CaS gelöst werden, während $Ca(SH)_2$ gebildet wird,

c) Abtrennung von unlöslichem Material von der in der Stufe b) gebildeten $H_2S$-haltigen $Ca(SH)_2$-Lösung,

d) Austreiben von $H_2S$ aus der in der Stufe c) gebildeten $H_2S$-haltigen $Ca(SH)_2$-Lösung unter Bildung eines so ausgewählten $H_2S$-Stromes, daß der Bedarf an gasförmigem $H_2S$ in der Stufe b) gedeckt wird,

e) Austreiben des restlichen $H_2S$ aus der in der Stufe d) gebildeten Lösung,

f) Abtrennung des in den Stufen d) und e) gebildeten ausgefällten $Ca(OH)_2$ oder $CaCO_3$ oder von beidem von der wäßrigen Phase,

g) Rückführung der wäßigen Phase von der Stufe f) zu dem Suspendierverfahren in der Stufe a).

2. Verfahren nach Anspruch 1, dadurch gekennzeichnet, daß das $H_2S$ in den Stufen d) und e) mit Hilfe von Vakuum ausgetrieben wird.

3. Verfahren nach Anspruch 1, dadurch gekennzeichnet, daß das $H_2S$ in den Stufen d) und e) mit Hilfe von Wasserdampft ausgetrieben wird.

4. Verfahren nach Anspruch 1, dadurch gekennzeichnet, daß das $H_2S$ in den Stufen d) und e) mit Hilfe von $CO_2$ ausgetrieben wird.

5. Verfahren nach Anspruch 4, dadurch gekennzeichnet, daß $H_2S$ in der Stufe d) mit $CO_2$ in so ausgewähltem Strom ausgetrieben wird, daß in dem austretenden $H_2S$ ein $CO_2$-Gehalt von wenigstens 5 Volumen-% $CO_2$, zweckmäßig von 5 bis 50 Volumen-% und vorzugsweise von 10 bis 30 Volumen-%, gebildet wird.

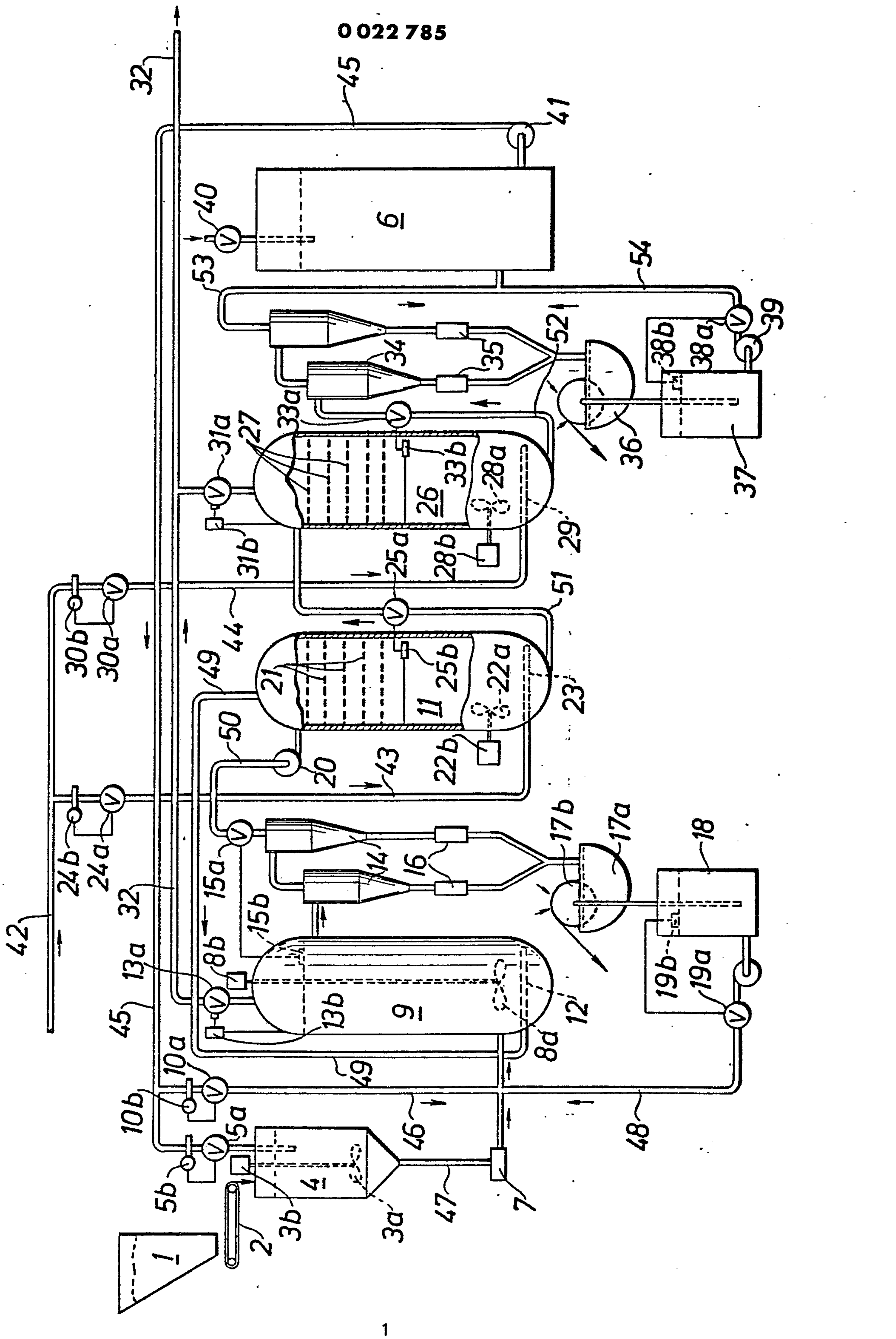

1
2
3a
3b
4
5a
5b
6
7
8a
8b
9
10a
10b
11
12
13a
13b
14
15a
15b
16
17a
17b
18
19a
19b
20
21
22a
22b
23
24a
24b
25a
25b
26
27
28a
28b
29
30a
30b
31a
31b
32
33a
33b
34
35
36
37
38a
38b
39
40
41
42
43
44
45
46
47
48
49
50
51
52
53
54